# EUROPÄISCHE PATENTSCHRIFT

(11) **EP 3 687 762 B1**
(45) Veröffentlichungstag und Bekanntmachung des Hinweises auf die Patenterteilung: **21.07.2021**
(21) Anmeldenummer: 18778431.9
(22) Anmeldetag: 21.09.2018
(51) Int. Cl.: B29C 49/78, B29C 49/04, B29C 51/46, B29C 51/10

(54) **VERFAHREN ZUR HERSTELLUNG VON KUNSTSTOFFHOHLKÖRPERN**
PROCESS FOR MANUFACTURING OF HOLLOW PLASTIC CONTAINERS
PROCÉDÉ DE LA FABRICTAION DE CONTENEURS CREUX EN MATIÈRE PLASTIQUE

(30) Priorität: 29.09.2017 DE 102017217468
(43) Veröffentlichungstag der Anmeldung: 05.08.2020
(73) Patentinhaber: Kautex Textron GmbH & Co. KG, 53229 Bonn (DE)
(72) Erfinder: MAYER, Thomas, 51371 Leverkusen (DE); HILD, Jochen, 53229 Bonn (DE); THIMM, Verena, 53783 Eitorf (DE)
(74) Vertreter: Richly & Ritschel Patentanwälte PartG mbB
(86) Internationale Anmeldenummer: PCT/EP2018/075636
(87) Internationale Veröffentlichungsnummer: WO 2019/063435

(56) Entgegenhaltungen:
- EP-A1- 3 037 242
- WO-A1-84/02874
- WO-A1-2004/007182
- DE-A1-102007 030 369

## Beschreibung

Die Erfindung betrifft ein Verfahren zur Herstellung von Kunststoffhohlkörpern durch Blasformen oder Tiefziehen unter Verwendung eines Tiefziehwerkzeuges oder eines Blasformwerkzeuges, umfassend die Extrusion von Vorformlingen aus thermoplastischem Kunststoff, wobei das Verfahren eine Wanddickensteuerung der Vorformlinge umfasst.

Verfahren zur Wanddickensteuerung der Vorformlinge bei der Extrusion sind im Stand der Technik grundsätzlich bekannt. Grundsätzlich unterscheidet man bei der Wanddickensteuerung zwischen einer Wanddickensteuerung über den gesamten Umfang oder die gesamte Breite des Vorformlings (WDS) oder über Teile der Länge oder des Umfangs oder der Breite des Vorformlings (PWDS). Die Wanddickensteuerung dient dazu, entlang der Längsrichtung eines Vorformlings Volumenbereiche mit unterschiedlichen Mengen an Kunststoffschmelze bereitzuhalten, sodass bei dem anschließenden Blasformprozess oder Tiefziehprozess Hohlkörper mit einer gleichmäßigen Wanddicke erzeugt werden können. Insbesondere beim Extrusionsblasformen werden Vorformlinge in Schwerkraftrichtung oberhalb eines geöffneten Werkzeugs extrudiert. Die Vorformlinge erfahren dadurch eine gewichtskraftbedingte Längung. Beim Ausformen oder Umformen innerhalb des Werkzeugs gibt es Bereiche der Vorformlinge, die unterschiedlich stark gedehnt werden, was dazu führt, dass der Vorformling im Werkzeug an verschiedenen Stellen eine unterschiedliche Wandstärke aufweist.

Bei der sogenannten axialen Wanddickensteuerung wird normalerweise entsprechend den Erfordernissen während der Vorformlingsbildung eine Stellwertkurve abgefahren, die durch eine Erweiterung oder Verringerung des Düsenspalts den Durchtritt der Kunststoffschmelze steuert. Zusätzlich oder alternativ kann auch vorgesehen sein, die Drehzahl einer Extruderschnecke eines die Kunststoffschmelze bereitstellenden Extruders zu verändern, um den Durchfluss zu erhöhen oder zu verringern. Die Materialstärke der Vorformlinge wird üblicherweise in Längsrichtung und bei komplex geformten Körpern häufig auch in Umfangsrichtung durch ein Wanddickenprogramm gesteuert, welches während der Vorformlingsbildung abläuft. Bei bekannten Verfahren zur Wanddickensteuerung wird dabei häufig die Gewichtsmessung als Regelgröße genutzt.

Ein Verfahren zur Herstellung von Kunststoffhohlkörpern durch Blasformen, bei dem zur Erzeugung eines sich in Vorformlingslängsrichtung ändernden Wandprofils die Vorformlingsbildung geregelt wird, ist beispielsweise aus der DE 10 2008 052 608 B3, DE 10 2007 030 369, WO 2004/007 182 oder WO 84/02874 bekannt. Das aus dieser Druckschrift bekannte Verfahren verwendet das Nettogewicht des Hohlkörpers, das Gewicht des unteren Butzens sowie das Gewicht des oberen Butzens als Regelgrößen für die Wanddickensteuerung.

Die bekannten Verfahren zur Wanddickensteuerung umfassen keine Rückkopplung aus der Qualitätskontrolle des Erzeugnisses.

Es ist grundsätzlich bekannt, die Wandstärke des fertigen Hohlkörpers von Zeit zu Zeit stichprobenartig zu überprüfen und die Parameter des Extrusionsprozesses entsprechend zu justieren.

Diese Vorgehensweise führt unweigerlich zu Ausschuss bei der Produktion.

Der Erfindung liegt daher die Aufgabe zugrunde, ein Verfahren zur Herstellung von Kunststoffhohlkörpern der eingangs genannten Art dahingehend zu verbessern, dass ein Hohlkörper mit definierter Wanddicke bei wenig Ausschuss hergestellt werden kann.

Die Aufgabe wird gelöst durch die Merkmale des Anspruchs 1. Vorteilhafte Ausgestaltungen der Erfindung ergeben sich aus den Unteransprüchen.

Ein Gesichtspunkt der Erfindung betrifft ein Verfahren zur Herstellung von Kunststoffhohlkörpern durch Blasformen oder Tiefziehen unter Verwendung eines Tiefziehwerkzeuges oder eines Blasformwerkzeugs, umfassend die Extrusion von Vorformlingen aus thermoplastischem Kunststoff, wobei das Verfahren eine Wanddickensteuerung der Vorformlinge umfasst, wobei eine Messung der Wandstärke der Vorformlinge innerhalb des Werkzeugs formnestseitig an wenigstens einem Referenzpunkt eines Vorformlings erfolgt, der erhaltene Messwert als Istwert mit einem vorgegebenen Sollwert verglichen wird und die Wanddickensteuerung in Abhängigkeit der Abweichungen zwischen Istwert und Sollwert zu einer Veränderung der Wandstärke des Vorformlings während der Extrusion oder zwischen Extrusionszyklen veranlasst wird.

Das Verfahren gemäß der Erfindung umfasst die kontinuierliche oder die diskontinuierliche Extrusion von thermoplastischem Kunststoff unter Verwendung wenigstens eines Extrusionskopfes, an den ein oder mehrere Extruder angeschlossen sein können. Unter der diskontinuierlichen Extrusion im Sinne der vorliegenden Erfindung ist die Extrusion einer thermoplastischen Masse in ein Speichervolumen eines sogenannten Speicherkopfes zu verstehen, der die Masse intermittierend in Form eines Vorformlings ausstößt. Unter kontinuierlicher Extrusion im Sinne der vorliegenden Erfindung und im Allgemeinen ist zu verstehen, dass die extrudierte, plastifizierte thermoplastische Formmasse kontinuierlich aus einem Extrusionskopf austritt. Sobald der Vorformling oder die Vorformlinge eine vorgegebene Länge erreicht haben, wird dieser am Extrusionskopf abgenommen und beispielsweise zwischen die geöffneten Teile eines sich dann schließenden Werkzeuges verbracht.

Das Verfahren kann die Extrusion einschichtiger oder mehrschichtiger Vorformlinge umfassen. Das Verfahren kann die Extrusion schlauchförmiger Vorformlinge oder bahnförmiger Vorformlinge umfassen. Das Verfahren kann die Extrusion schlauchförmiger Vorformlinge umfassen, die unmittelbar bei Austritt oder nach dem Austritt aus dem Extrusionskopf zu bahnförmigen Vorformlingen aufgeschnitten und ausgebreitet werden.

Die Veränderung der Wandstärke des Vorformlings kann dynamisch, d.h. während der Extrusion, geregelt werden, eine Veränderung kann allerdings auch zyklisch vorgenommen werden. Die Veränderung kann durch Parametrisierung eines in einer elektronischen Steuer- und Regeleinrichtung hinterlegten Wanddickenprogramms erfolgen.

Wenn in der vorliegenden Patentanmeldung von einer Mehrzahl von Vorformlingen die Rede ist, so ist damit sowohl die parallele Extrusion mehrerer Vorformlinge als auch die sequenzielle Extrusion mehrerer Vorformlinge gemeint.

Bei einer bevorzugten Variante des Verfahrens gemäß der Erfindung ist vorgesehen, dass die Vorformlinge als bahnförmige plastifizierte Vorformlinge in ein geöffnetes Blasformwerkzeug verbracht werden und innerhalb des Blasformwerkzeugs unter Ausnutzung der Plastifizierungswärme aus der Extrusion zunächst zu schalenförmigen Zwischenerzeugnissen geformt werden, wobei die Zwischenerzeugnisse in einem weiteren Verfahrensschritt zu einem geschlossenen Hohlkörper zusammengefügt werden, wobei die Messung nach dem Formen der Zwischenerzeugnisse bei geöffnetem oder geschlossenem Blasformwerkzeug erfolgt.

Vorzugsweise wird wenigstens eines der schalenförmigen Zwischenerzeugnisse während der Messung in dem geöffneten Blasformwerkzeug fixiert. Eine solche Fixierung kann beispielsweise dadurch erfolgen, dass die betreffende Teilkavität des Blasformwerkzeugs mit Unterdruck beaufschlagt wird. Alternativ kann eine mechanische Fixierung (Hinterschnitt, Niederhalter) vorgesehen sein.

Das verwendete Blasformwerkzeug kann beispielsweise drei oder mehr Werkzeugteile aufweisen, von denen wenigstens zwei Teile jeweils Teilkavitäten bilden, in denen die schalenförmigen Zwischenerzeugnisse ausgebildet werden. Nach dem Verfahren gemäß der Erfindung kann beispielsweise vorgesehen sein, dass zunächst zwei flächige, bahnförmige Vorformlinge aus plastifiziertem thermoplastischem Kunststoff zwischen jeweils die Teilkavitäten aufweisende Teile des Werkzeugs verbracht werden, die Teile des Werkzeugs gegen einen zwischen den Vorformlingen angeordneten Werkzeugteiler oder Zwischenrahmen geschlossen werden, und die Vorformlinge unter Anwendung von Differenzdruck in die Teilkavitäten eingelegt und ausgeformt werden.

In einem separaten Verfahrensschritt können die Werkzeuge nach dem Formen der schalenförmigen Zwischenerzeugnisse geöffnet werden und an wenigstens einem schalenförmigen Zwischenerzeugnis kann ein Einbauteil oder ein Anbauteil gefügt werden, wobei der Verfahrensschritt des Fügens des Einbauteils nur durchgeführt wird, wenn die Abweichung zwischen Istwert und Sollwert eine vorgegebene Größe nicht überschreitet.

Die schalenförmigen Zwischenerzeugnisse können durch erneutes Schließen der Werkzeuge zu einem fertigen Hohlkörper zusammengefügt werden.

Das Verfahren kann zwei-oder dreistufig durchgeführt werden. In einem ersten Schritt können die Teile des Werkzeugs gegen einen Werkzeugteiler verfahren werden, der ausschließlich dazu dient, das Werkzeug abzudichten, um zunächst die schalenförmigen Zwischenerzeugnisse unter Aufbringung von Differenzdruck auszuformen. Sodann kann das Blasformwerkzeug wieder geöffnet werden und in einem weiteren Verfahrensschritt können beispielsweise mittels eines Handhabungsroboters oder mittels eines Fügerahmens oder eines wie auch immer gearteten Mittenwerkzeuges Einbauteile an die noch warmplastischen schalenförmigen Zwischenerzeugnisse gefügt werden. Sollten die vorher erfassten Messwerte nicht gut sein, in dem Sinne, dass die Wandstärke des Vorformlings an der einen oder anderen Stelle nicht dem vorgegebenen Sollwert entspricht, kann gemäß dem erfindungsgemäßen Verfahren vorgesehen sein, die schalenförmigen Zwischenerzeugnisse aus dem Verfahren auszuschleusen, was den Vorzug hat, dass der Verfahrensschritt des Fügens von Einbauteile entfällt.

Zweistufig im Sinne der vorstehenden Ausführungen bedeutet, dass alternativ das Verfahren mit einem Werkzeug durchgeführt wird, welches ein Mittenwerkzeug umfasst, wobei das Ausformen der schalenförmigen Zwischenerzeugnisse, die Durchführung der Messung und gegebenenfalls das Fügen der Einbauteile nach einem anfänglichen Schließen der Blasformhälften gegen das Mittenwerkzeug erfolgt. Bei einer zweiten Schließbewegung werden die schalenförmigen Zwischenerzeugnisse miteinander verschweißt, nachdem der Mittenrahmen oder der Werkzeugkern zwischen den Blasformhälften entfernt wurde.

Dreistufig bedeutet in diesem Zusammenhang, dass die Blasformhälften zunächst gegen einen Abdichtrahmen verfahren werden, sodann eine Ausformung der Zwischenerzeugnisse erfolgt, danach das Blasformwerkzeug geöffnet und gegen einen Fügerahmen geschlossen wird, um wenigstens ein Einbauteil an wenigstens einem schalenförmigen Zwischenerzeugnis zu befestigen. Die Messung erfolgt unmittelbar nach dem Ausformen der Zwischenerzeugnisse, d. h. vor dem zweiten Schließen der Blasformhälften gegen den Fügerahmen. Nach einem erneuten Öffnen der Blasformhälften wird der Fügerahmen entfernt und die Blasformhälften werden zwecks Zusammenfügen der schalenförmigen Zwischenerzeugnisse wieder gegeneinander geschlossen.

Die Befestigung des Einbauteils oder Anbauteils kann durch Schweißen und/oder Vernieten erfolgen. Die Befestigung des Einbauteils oder Anbauteils kann unter Zuhilfenahme eines Handhabungsroboters oder eines Fügerahmens, der zwischen die geöffneten Teile des Werkzeugs verbracht wird, erfolgen.

Erfindungsgemäß kann vorgesehen sein, dass die Messung der Wanddicke vor der Befestigung des Einbauteils und vorzugsweise im Bereich einer hierfür vorgesehenen Fügefläche für das Einbauteil erfolgt. Damit ist im Falle einer Verschweißung oder Vernietung des Einbauteils auch sichergestellt, dass die Wandstärke in dem betreffenden Bereich zur Verschweißung oder Vernietung ausreichend bemessen ist.

Die Messung erfolgt zweckmäßigerweise formnestseitig, d.h., wenn der betreffende Vorformling in der jeweiligen Teilkavität des Werkzeuges zu einem schalenförmigen Zwischenerzeugnis geformt ist von derjenigen Seite, die von der Teilkavität abgewandt ist.

Das Verfahren gemäß der Erfindung kann unter Verwendung wenigstens einer Messeinrichtung durchgeführt werden, die ausgewählt ist aus einer Gruppe von Messeinrichtungen umfassend taktile Sensoren, Ultraschallsensoren, kapazitive Sensoren oder optische Sensoren.

Als taktile Sensoren kommen beispielsweise federbelastete Taster in Betracht, die an einem Fügerahmen, einem Zwischenrahmen, einem Werkzeugteiler oder einem sogenannten Kern als Mittenwerkzeug befestigt sein können.

Bevorzugt wird die Messung mit optischen Sensoren, beispielsweise mit Lasersensoren durchgeführt. Hierzu kann beispielsweise vorgesehen sein, an einem Zwischenrahmen, an einem Fügerahmen oder an einem Werkzeugteiler einen oder mehrere Lasersensoren zur Distanzmessung zu befestigen. Die Lasersensoren können in einer festgelegten Position beispielsweise an dem Zwischenrahmen montiert sein und zur Innenseite des zu fertigenden Hohlkörpers ausgerichtet sein. Mittels der Lasersensoren kann die Entfernung zu einer Innenseite der schalenförmigen Zwischenerzeugnisse gemessen werden.

Durch eine anfängliche, Nullagen-Einstellung der Sensorik, beispielsweise bei Produktionsstart kann die Distanz von dem optischen Sensor zu der Innenseite der betreffenden Teilkavität bestimmt werden. Die Differenz der Distanz zu der Teilkavität und der Distanz zu dem schalenförmigen Zwischenerzeugnis ergibt die Wanddicke an der entsprechenden Stelle des schalenförmigen Zwischenerzeugnisses und gegebenenfalls des fertigen Hohlkörpers. Eine solche Nulllagen-Einstellung kann von Zeit zu Zeit während der Produktion, bei beispielsweise im Tagesverlauf schwankenden Temperaturen zur Temperaturkompensation durchgeführt werden. Auch die Temperaturen des Werkzeugs können sich während eines gewissen Produktionszeitraums verändern und es erforderlich machen, die Einstellung zu wiederholen. Bei der Einstellung bzw. Kalibrierung der Sensoren kann es sinnvoll sein, einen zu erwartenden Schrumpfungsverzug das sich abkühlende Kunststoff Hohlkörpers zu berücksichtigen, beispielsweise in Form eines sogenannten Offset bei der Einstellung.

Vorzugsweise umfasst das Verfahren die Durchführung von Messungen der Wandstärke des oder der schalenförmigen Zwischenerzeugnisse an verschiedenen Stellen unter Verwendung mehrerer Lasersensoren.

Als Lasersensoren kommen beispielsweise Sensoren in Betracht, die eine Laserlichtquelle nutzen, die unter einem Winkel das zu messende Objekt beleuchten. Ein elektronischer Bildwandler, der Teil des Lasersensors ist, beispielsweise ein CCD oder CMOS Sensor oder ein PSD, registriert das Streulicht. Bei Kenntnis der Strahlrichtung und des Abstandes zwischen Sensor und Lichtquelle kann damit der Abstand vom Objekt zum Sensor bestimmt werden. Der Begriff Lasersensor im Sinne der vorliegenden Anmeldung umfasst wenigstens eine Laserlichtquelle und einen elektronischen Bildwandler, der vorstehend der Einfachheit halber als Sensor bezeichnet wurde.

Die Wanddickensteuerung bzw. Wanddickenregelung erfolgt vorzugsweise dadurch, dass eine Steuer-und Regeleinrichtung in der Maschinensteuerung auf eine Düsenspaltverstellung an einem Extrusionskopf einwirkt. In der Steuer-und Regeleinrichtung kann beispielsweise ein Programm zur Wanddickensteuerung hinterlegt werden, dass während jedes Zyklus abgefahren wird. Die Wanddickensteuerung kann sowohl axial als auch radial, über den gesamten Umfang oder die gesamte Breite des oder der Vorformlinge oder auch über Teile des Umfangs oder der Breite des oder der Vorformlinge erfolgen. Die Wanddickensteuerung kann dynamisch während der Extrusion oder auch statisch zwischen einzelnen Extrusionszyklen erfolgen.

Die Erfindung wird nachstehend anhand eines in den Zeichnungen dargestellten Ausführungsbeispiels erläutert.

Es zeigen:
- Figur 1: eine schematische Darstellung der Kavität eines Blasformwerkzeugs zur Herstellung von Hohlkörpern nach dem sogenannten Halbschalen-Verfahren, welche das Kalibrieren der bei dem Verfahren verwendeten Messeinrichtung veranschaulicht,
- Figur 2: eine schematische Darstellung entsprechend derjenigen in Figur 1, die den Messvorgang veranschaulicht und
- Figur 3: eine schematische Darstellung eines Lasersensors während des Messvorgangs, die die Funktionsweise des Lasersensors veranschaulicht.

Das erfindungsgemäße Verfahren wird nachstehend anhand des sogenannten Halbschalen-Verfahrens erläutert. Dabei handelt es sich um ein Extrusionsblasformverfahren, bei welchem zwei Vorformlinge als bahnförmige, plastifizierte Vorformlinge aus thermoplastischem Kunststoff in ein geöffnetes Blasformwerkzeug verbracht werden und innerhalb des Blasformwerkzeugs unter Ausnutzung der Plastifizierungswärme aus der Extrusion zunächst zu schalenförmigen Zwischenerzeugnissen geformt werden, wobei die Zwischenerzeugnisse in einem weiteren Verfahrensschritt zu einem geschlossenen Hohlkörper zusammengefügt werden. Dabei wird entweder ein schlauchförmiger Vorformling extrudiert, der an gegenüberliegenden Seiten der Länge nach aufgetrennt wird, oder es werden zwei bahnförmige Vorformlinge extrudiert. Die Vorformlinge werden vorzugsweise in Schwerkraftrichtung extrudiert, wobei ein oder mehrere Extrusionsköpfe unmittelbar oberhalb des Blasformwerkzeugs angeordnet sein können. Wie eingangs bereits bemerkt, kann das Verfahren gemäß der Erfindung auch als herkömmliches Extrusionsblasformverfahren oder als Tiefziehverfahren durchgeführt werden.

In den Zeichnungen ist die Kavität 1 des Blasformwerkzeugs schematisch dargestellt. Teile des Blasformwerkzeugs sind aus Vereinfachungsgründen weggelassen. Das Blasformwerkzeug umfasst zwei Teilkavitäten, die jeweils in sogenannten Blasformhälften 3 ausgebildet sind. Jede Blasformhälfte 3 ist auf einer Formaufspannplatte einer Blasformmaschine angeordnet. Die Formaufspannplatten sind wiederum auf einem Schließgestell angeordnet und über das Schließgestell aufeinander zu und voneinander weg bewegbar. Das Blasformwerkzeug umfasst weiterhin ein Mittenwerkzeug als Zwischenrahmen 2 sowie gegebenenfalls einen Fügerahmen, die auf einem gemeinsamen Maschinengestell angeordnet sein können.

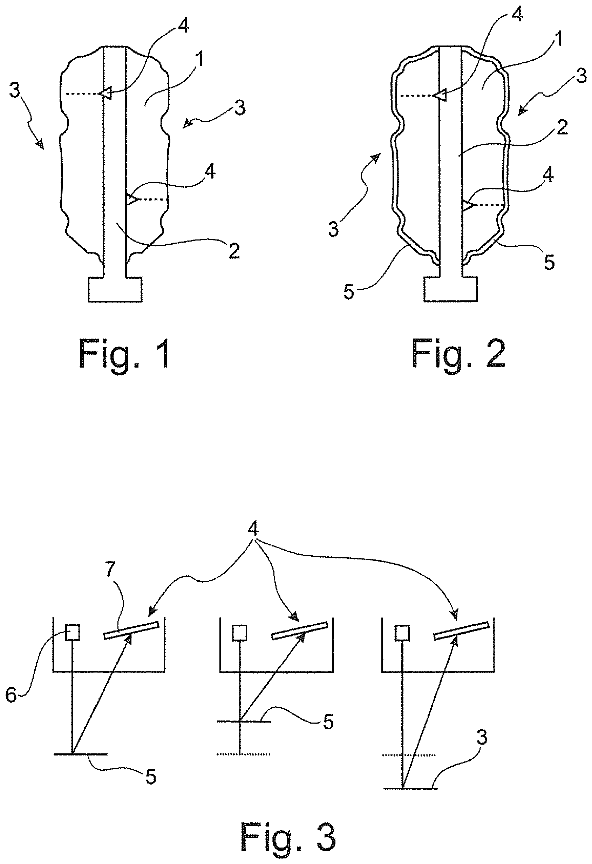

In Figur 1 ist lediglich die leere Kavität des Blasformwerkzeugs dargestellt, wobei die mit 3 bezeichneten Blasformhälften gegen den Zwischenrahmen 2 geschlossen sind. An dem Zwischenrahmen 2 sind zwei Lasersensoren 4 befestigt, und zwar an hierfür vorgesehenen, vorgegebenen Stellen des Zwischenrahmens 2. Figur 1 veranschaulicht den Vorgang des Kalibrierens der Lasersensoren 4. Dabei wird über die Lasersensoren 4 die Distanz von der betreffenden Stelle des Zwischenrahmens 2 zu der Innenseite der Teilkavitäten gemessen. Der Vorgang des Kalibrierens, bzw. der Nulllagen-Einstellung der Sensorik, der in Figur 1 veranschaulicht ist, wird anfänglich, dass es zu Produktionsstart und danach von Zeit zu Zeit in nicht regelmäßigen Abständen durchgeführt. Diese Kalibrierung kann beispielsweise zur Kompensation von Temperaturveränderungen über den Tagesverlauf dann und wann erforderlich sein. Bei der Kalibrierung kann beispielsweise auch ein Offset eingestellt werden, der beispielsweise den Schrumpfungsverzug des zu fertigenden Hohlkörpers berücksichtigt.

Figur 2 veranschaulicht den Messvorgang während des Herstellungsverfahrens des Hohlkörpers. Der Messvorgang wird ebenso mittels der Lasersensoren 4 durchgeführt, wobei, wie dies in Figur 2 schematisch veranschaulicht ist, in der Kavität 1 des Blasformwerkzeugs bereits schalenförmige Zwischenerzeugnisse 5 ausgeformt sind. Die schalenförmigen Zwischenerzeugnisse 5 sind bei dem in Figur 2 dargestellten Verfahrensschritt noch im warmplastischen Zustand und werden gegebenenfalls unter Anwendung von Unterdruck in den Teilkavitäten fixiert. Während sich die schalenförmigen Zwischenerzeugnisse 5 in dem in Figur 2 dargestellten Zustand befinden und die Blasformhälften gegen den Zwischenrahmen geschlossen sind, wird der Messvorgang durchgeführt. Gemessen wird die Distanz jeweils von dem betreffenden Lasersensor 4 des Zwischenrahmens zu einem Referenzpunkt auf der Innenseite, d.h. der in die Kavität weisenden Seite, des schalenförmigen Zwischenerzeugnisses 5. Die Differenz zwischen einer Messung bei leerem Werkzeug und einer Messung unmittelbar nach Ausformen der schalenförmigen Zwischenerzeugnisse 5 ergibt die Wandstärke des schalenförmigen Zwischenerzeugnisses 5.

Der Messwert wird einer Regel- und Steuereinrichtung zugeführt, je nach Abweichung von einem gegebenen Sollwert wird die Wanddickensteuerung entsprechend veranlasst, einen Eingriff in die Steuerung oder einen Eingriff in ein Wanddickenprogramm vorzunehmen.

Als Referenzpunkte im Sinne der Erfindung werden Referenzpunkte gewählt, die für die Wandstärke des fertigen Hohlkörpers oder für die Befestigung von Einbauteilen oder Anbauteilen kritisch sind.

Figur 3 veranschaulicht das Lasermessverfahren mithilfe eines Lasersensors 4. Das Verfahren wird als Triangulationsverfahren durchgeführt. Ein aus einer Laserlichtquelle 6 emittierter Laserstrahl trifft in einem Winkel auf ein Objekt, im vorliegenden Fall auf das in der Teilkavität ausgeformte schalenförmige Zwischenerzeugnis 5, wird von diesem reflektiert und von einem elektronischen Bildwandler 7 erfasst. Die Verbindung zwischen den Lichtstrahlen von und zu dem Objekt bildet ein Dreieck, das die geometrische Bestimmung der Distanz zum Objekt ermöglicht.

### Bezugszeichenliste

- 1: Kavität
- 2: Zwischenrahmen
- 3: Blasformhälften
- 4: Lasersensoren
- 5: Zwischenerzeugnisse
- 6: Laserlichtquelle
- 7: elektronischer Bildwandler

## Patentansprüche

1. Verfahren zur Herstellung von Kunststoffhohlkörpern durch Blasformen, unter Verwendung eines Blasformwerkzeuges, umfassend die Extrusion von Vorformlingen aus thermoplastischem Kunststoff, wobei das Verfahren eine Wanddickensteuerung der Vorformlinge umfasst, wobei die Vorformlinge als bahnförmige plastifizierte Vorformlinge in das geöffnete Blasformwerkzeug verbracht werden und innerhalb des Blasformwerkzeugs unter Ausnutzung der Plastifizierungswärme aus der Extrusion zu schalenförmigen Zwischenerzeugnissen geformt werden, wobei eine Messung der Wandstärke der Zwischenerzeugnisse innerhalb des geöffneten oder geschlossenen Blasformwerkzeugs formnestseitig an wenigstens einem Referenzpunkt eines Zwischenerzeugnisses erfolgt, der erhaltene Messwert als Istwert mit einem vorgegebenen Sollwert verglichen wird und die Wanddickensteuerung in Abhängigkeit der Abweichung zwischen Istwert und Sollwert eine Veränderung der Wandstärke des Vorformlings im Sinne einer Regelung zwischen Extrusionszyklen veranlasst wird.

2. Verfahren nach Anspruch 1, **dadurch gekennzeichnet, dass** die Zwischenerzeugnisse in einem weiteren Verfahrensschritt zu einem geschlossenen Hohlkörper zusammengefügt werden, wobei die Messung nach dem Formen der Zwischenerzeugnisse erfolgt.

3. Verfahren nach einem der Ansprüche 1 oder 2, **dadurch gekennzeichnet, dass** vor dem Zusammenfügen der schalenförmigen Zwischenerzeugnisse zu dem Hohlkörper an wenigstens einem schalenförmigen Zwischenerzeugnis mindestens ein Einbauteil gefügt wird, wobei die Messung der Wanddicke vor der Befestigung des Einbauteils und vorzugsweise im Bereich einer hierfür vorgesehenen Fügefläche für das Einbauteil erfolgt und wobei der Verfahrensschritt des Fügens des Einbauteils nur durchgeführt wird, wenn die Abweichung zwischen Istwert und Sollwert eine vorgegebene Größe nicht überschreitet.

4. Verfahren nach einem der Ansprüche 1 bis 3, **dadurch gekennzeichnet, dass** das schalenförmige Zwischenerzeugnis während der Messung innerhalb des Blasformwerkzeugs fixiert wird.

5. Verfahren nach einem der Ansprüche 1 bis 4, **dadurch gekennzeichnet, dass** die Messung mittels wenigstens einer Messeinrichtung erfolgt, die ausgewählt ist aus einer Gruppe von Messeinrichtungen umfassend taktile Sensoren, Ultraschallsensoren, kapazitive Sensoren oder optische Sensoren, insbesondere Lasersensoren.

6. Verfahren nach einem der Ansprüche 1 bis 5, **dadurch gekennzeichnet, dass** die Messung mittels wenigstens einer Messeinrichtung durchgeführt wird, die an einem Werkzeugteiler, einem Fügerahmen oder einem Zwischenrahmen des Blasformwerkzeugs an wenigstens einem hierfür vorgesehenen Messpunkt installiert ist.

7. Verfahren nach Anspruch 6, **dadurch gekennzeichnet, dass** die Messung als optische Messung, insbesondere als Lasermessung durchgeführt wird.

8. Verfahren nach einem der Ansprüche 1 bis 7, **dadurch gekennzeichnet, dass** die Wanddickensteuerung eine Düsenspaltverstellung an einem Extrusionskopf bewirkt.

9. Verfahren nach einem der Ansprüche 1 bis 8, **dadurch gekennzeichnet, dass** eine anfängliche und gegebenenfalls wiederholte Nulllagen-Einstellung oder Kalibrierung der Messeinrichtung vorgesehen ist.

10. Verfahren nach einem der Ansprüche 1 bis 9, **dadurch gekennzeichnet, dass** die schalenförmigen Zwischenerzeugnisse bei einer Abweichung zwischen Istwert und Sollwert um einen gegebenen Betrag aus dem Prozess ausgeschleust werden.

## Claims

1. Method for producing hollow bodies made of plastics by blow molding using a blow-molding tool, comprising the extrusion of preforms from thermoplastics, the method comprising a wall thickness control of the preforms, wherein the preforms are placed as sheet-like plasticized preforms in an open blow-molding tool and are first formed into shell-like intermediate products within the blow-molding tool using the heat of plasticization from the extrusion, wherein a measurement of the wall thickness of the intermediate products is carried out within the open or closed blow-molding tool on the mold cavity side on at least one reference point of a preform, the measured value obtained is compared as an actual value with a predetermined target value and the wall thickness control is triggered to change the wall thickness of the preform during extrusion or between extrusion cycles depending on the deviation between the actual value and the target value in the sense of regulating between extrusion cycles.

2. Method according to claim 1, **characterized in that** the intermediate products are joined together to a closed hollow body in a further method step, wherein the measurement is carried out following the molding of the intermediate products.

3. Method according to either claim 1 or claim 2, **characterized in that** at least one built-in part is joined to at least one shell-like intermediate product before the shell-like intermediate products are joined to form the hollow body, wherein the measurement of the wall thickness takes place before the mounting of the built-in part and preferably in the area of a joint surface provided for the built-in part and wherein the step of joining the built-in part is only carried out if the deviation between the actual value and the target value does not exceed a predetermined variable.

4. Method according to any of claims 1 to 3, **characterized in that** the shell-like intermediate product is fixed within the blow-molding tool during the measurement.

5. Method according to any of claims 1 to 4, **characterized in that** the measurement is carried out by means of at least one measuring device which is selected from a group of measuring devices comprising tactile sensors, ultrasonic sensors, capacitive sensors or optical sensors, in particular laser sensors.

6. Method according to any of claims 1 to 5, **characterized in that** the measurement is carried out by means of at least one measuring device which is installed on a tool divider, a joining frame or an intermediate frame of the blow-molding tool at at least one measuring point provided for this purpose.

7. Method according to claim 6, **characterized in that** the measurement is carried out as an optical measurement, in particular as a laser measurement.

8. Method according to any of claims 1 to 7, **characterized in that** the wall thickness control causes a nozzle gap adjustment on an extrusion head.

9. Method according to any of claims 1 to 8, **characterized in that** an initial and possibly repeated zero position setting or calibration of the measuring device is provided.

10. Method according to any of claims 1 to 9, **characterized in that** the shell-like intermediate products are discharged from the process by a given amount in the event of a discrepancy between the actual value and the target value.

## Revendications

1. Procédé de fabrication de corps creux en matière plastique par moulage par soufflage, à l'aide d'un outil de moulage par soufflage, comprenant l'extrusion de préformes en matière thermoplastique, le procédé comprenant une commande de l'épaisseur de paroi des préformes, les préformes étant amenées dans l'outil de moulage par soufflage ouvert sous forme de préformes plastifiées en forme de bande et étant formées en des produits intermédiaires en forme de coque à l'intérieur de l'outil de moulage par soufflage à l'aide de la chaleur de plastification provenant de l'extrusion, l'épaisseur de paroi des produits intermédiaires à l'intérieur de l'outil de moulage par soufflage ouvert ou fermé étant mesurée côté cavité de moule au niveau d'au moins un point de référence d'un produit intermédiaire, la valeur de mesure obtenue étant comparée, en tant que valeur réelle, à une valeur de consigne spécifiée et la commande de l'épaisseur de paroi initiant, en fonction de l'écart entre la valeur réelle et la valeur de consigne, une modification de l'épaisseur de paroi de la préforme au sens d'un réglage entre les cycles d'extrusion.

2. Procédé selon la revendication 1, **caractérisé en ce que** les produits intermédiaires sont assemblés dans une autre étape de procédé afin de former un corps creux fermé, la mesure étant effectuée après le moulage des produits intermédiaires.

3. Procédé selon l'une des revendications 1 ou 2, **caractérisé en ce qu'**avant l'assemblage des produits intermédiaires en forme de coque en corps creux, au moins une partie encastrée est assemblée au niveau d'au moins un produit intermédiaire en forme de coque, l'épaisseur de la paroi étant mesurée avant la fixation de la partie encastrée et de préférence dans la zone d'une surface d'assemblage destinée à la partie encastrée et prévue à cet effet et l'étape de procédé d'assemblage de la partie encastrée étant effectuée uniquement si l'écart entre la valeur réelle et la valeur de consigne ne dépasse pas une grandeur prédéterminée.

4. Procédé selon l'une des revendications 1 à 3, **caractérisé en ce que** le produit intermédiaire en forme de coque est fixé à l'intérieur de l'outil de moulage par soufflage lors de la mesure.

5. Procédé selon l'une des revendications 1 à 4, **caractérisé en ce que** la mesure est effectuée au moyen d'au moins un dispositif de mesure choisi dans un groupe de dispositifs de mesure comprenant des capteurs tactiles, des capteurs à ultrasons, des capteurs capacitifs ou des capteurs optiques, en particulier des capteurs laser.

6. Procédé selon l'une des revendications 1 à 5, **caractérisé en ce que** la mesure est effectuée au moyen d'au moins un dispositif de mesure qui est installé sur un diviseur d'outils, un cadre d'assemblage ou un cadre intermédiaire de l'outil de moulage par soufflage au niveau d'au moins un point de mesure prévu à cet effet.

7. Procédé selon la revendication 6, **caractérisé en ce que** la mesure est effectuée sous forme de mesure optique, en particulier sous forme de mesure laser.

8. Procédé selon l'une des revendications 1 à 7, **caractérisé en ce que** la commande d'épaisseur de paroi effectue un réglage de fente de buse au niveau d'une tête d'extrusion.

9. Procédé selon l'une des revendications 1 à 8, **caractérisé en ce qu'**une mise à zéro ou un étalonnage initial(e) et éventuellement répété(e) du dispositif de mesure est prévu(e).

10. Procédé selon l'une des revendications 1 à 9, **caractérisé en ce que** les produits intermédiaires en forme de coque sont évacués du processus en cas d'écart entre la valeur réelle et la valeur de consigne d'une quantité donnée.
